# EUROPEAN PATENT APPLICATION

(11) **EP 4 233 565 A2**
(43) Date of publication of application: **30.08.2023**
(21) Application number: 23163628.3
(22) Date of filing: 14.09.2016
(51) Int. Cl.: A23P 10/20, A23L 27/00, A21D 13/00, A23L 7/157, A23L 7/13

(54) **SEASONING COMPOSITION, SNACK FOOD COMPRISING SAID COMPOSITION AND METHOD OF SEASONING A SNACK FOOD**

(30) Priority: 15.09.2015 GB 201516313
(62) Divisional of application: 16766281.6
(71) Applicant: Givaudan SA, 1214 Vernier (CH)
(72) Inventor: VORSTER, Susanna Magdalena, 1403 HT Bussum (NL); GONG, Yixiao, 1403 CA Bussum (NL); ROUKENS, Henri, 1271CP Huizen (NL); WITTEVEEN, Frans, 3833 CM Leusden (NL)
(74) Representative: Global Patents

(57) **Abstract**

A seasoning composition suitable for application topically to a snack food, and in particular an uncooked snack food, the seasoning composition comprising a plurality of seasoning-containing granules.

## Description

### Field of the Invention

The present disclosure is concerned with methods for the topical application of seasonings to snack foods. The disclosure is further concerned with compositions containing seasonings that are suitable for topical application to snack foods. The disclosure is still further concerned with snack foods incorporating said seasoning compositions.

### Background of the Invention

It is known in the art to apply seasonings to mass produced, farinaceous or starch-based snack foods, such as crackers.

Seasonings may be applied topically by causing a baked or fried snack food to pass through a curtain of powdered seasoning, which falls onto the surface of the snack food under force of gravity, or is impelled, by mechanical or pneumatic action, into contact with the surface of the snack food. The snack food is usually treated with oil or fat before application of the seasoning to assist adhesion of the seasoning to the surface of the snack food.

As is well known in the art, application of topical seasoning is not a trivial undertaking and is hampered by several drawbacks.

A problem related to the topical application of dry powder seasonings is that they may contain a significant fraction of fine particles of sufficiently low specific gravity as to remain air-borne during application. Not only is this wasteful, on a production plant, it can also contaminate nearby production lines and even represent an explosion hazard unless special precautionary measures put in place to prevent this.

Dry powder seasonings also do not adhere well to the surface of snack foods without processing aids.

It has proposed to deal with the problem of adhesion by incorporating seasoning into uncooked snack food dough. However, mixing seasoning into the matrix of uncooked snack food dough can delay its release and alter its sensory characteristics, such as its up-front impact. Furthermore, the pleasing aesthetics of a visible topical seasoning is not achievable when incorporating seasoning in this way.

Furthermore, aside from both the sensory and aesthetic considerations, many seasoning ingredients cannot be added to snack foods in this way because they are thermally sensitive and would not survive the baking or frying process. Indeed, applicant is not aware of any commercial snack food formulation containing a topical seasoning, which has been applied topically to uncooked snack food dough with the possible exception of topically applied salt grains applied to pretzel dough.

For the reasons described above at least, when it is desired to apply powdered seasonings topically to cooked snack food, it is conventional to apply them in the form of slurries (dispersed seasoning ingredients in oils or fats), wherein the oil or fat is employed as an adhesion promoter for the seasoning particles.

Of course, an obvious disadvantage of using oil as a processing aid in this way is that it can add considerable fat content to a snack food, which is increasingly unacceptable for the growing numbers of health-conscious consumers. However, in addition, slurries can also add to the operational complexity in the industrial preparation of snack foods. For example, the seasoning ingredients need to be suspended stably in oil; and still further, the spray nozzles used to spray the slurries onto snack foods are prone to become clogged as a result of excessive build-up of a greasy slurry residue around the nozzles.

In order to address the problem of the high fat content of slurries, as well as the concomitant operational complexities, it has been proposed to apply topical seasoning in the form of oilin-water emulsions. However, considering that snack foods must have very low water content, the emulsion must contain low levels of water, which may not be sufficient to solubilize the relatively high levels of water-soluble ingredients that provide flavourists with the latitude to create rich, complex and authentic seasonings in a cost-effective manner.

Topical seasonings, and simple methods of their application, are highly sought after by industrial snack foods manufacturers. However, to meet this need, the seasoning must also be capable of being applied in simple and clean manner to keep operational costs as low as possible. The seasoning must also not create issues of flavour contamination or even hazard.

### Summary of the Invention

The present invention addresses deficiencies in the prior art, and provides in a first aspect, a seasoning composition comprising a solid seasoning component in the form of a plurality of granules, preferably having a volume average particle size in the range of 250 to 1400 microns, wherein said granules contain a mixture of seasoning ingredients; a carrier for the seasoning ingredients; and optionally at least one adjuvant component.

In another aspect the invention provides a snack food containing a topical coating of said seasoning composition.

In yet another aspect the invention provides a method of preparing a seasoned snack food, the method comprising the steps of applying the seasoning composition topically to the snack food.

In yet another aspect the invention provides the use of the seasoning composition to apply flavour to a snack food.

### Detailed Description of the Invention

Low fat and reduced fat, flavour impactful seasoned snack foods, which contain a visually appealing coating of topical seasoning, can be achieved in accordance with the present invention. Furthermore, in exercise of the present invention, it is possible to produce seasoned snack foods on an industrial scale, in an operationally simple, clean and nonhazardous manner.

The seasoning ingredients employed in a seasoning composition according to the present invention are selected in such a way as to impart or modify in a positive or pleasant way, the taste and/or aroma of a snack food.

Seasoning or seasoning ingredients, as the terms are used herein, relate to a mixture of flavour and seasoning ingredients, which may be applied topically to a snack food to impart a hedonic effect. A seasoning will be recognized by a person skilled in the art as being able, when applied topically, to impart or modify in a positive or pleasant way the taste of a snack food.

The nature and type of the seasoning ingredients present in the seasoning composition does not warrant a particularly exhaustive description here, the skilled person being able to select them on the basis of its general knowledge and according to intended use or application and the desired organoleptic effect. In general terms, these ingredients belong to chemical classes as varied as alcohols, aldehydes, ketones, esters, ethers, acetates, nitriles, terpenoids, nitrogenous or sulphurous heterocyclic compounds and essential oils, and can be of natural or synthetic origin. Many of the ingredients useful in the seasoning composition are described in reference texts such as the book by S. Arctander, Perfume and Flavor Chemicals, 1969, Montclair, N.J., USA, or its more recent versions, or in other works of a similar nature, as well as in the abundant patent literature in the field of flavours and seasonings.

The seasoning composition comprises multiple seasoning ingredients, and in particular will contain one or more of the following types of ingredients: a tastant, such as salts, acids, sweeteners or mixtures thereof; tastant enhancers, such as MSG and ribonucleotides; dairy powders, e.g. whey powders, fat powders, creamers and the like; minerals, such as calcium phosphate, tri-potassium phosphate, or ammonium chloride; all manner of natural, nature identical or artificial flavours that are useful in savoury snack food applications, to provide a particular taste and/or aroma such as natural and/or synthetic flavour chemicals, essential oils and oleoresins; and ingredients that alter the body or mouthfeel of a seasoning, or which impart an organoleptic effect other than taste or aroma, such as tingling, salivating, lingering, succulence, heating, or an off-note masking effect, or mixtures thereof, such as any of the essential amino acids or mixtures thereof and food acids or mixtures thereof.

Non-limiting examples of seasoning ingredients useful in seasoning compositions according to the present invention include one of more of:
Sugars; fats; salts; MSG, calcium phosphate; food acids, such as citric, malic, tartaric, fumaric, lactic, acetic, malic, lactic and succinic acid, and other tastants; amino acids, for example any of the essential amino acids and mixtures thereof; proteins; purines, e.g. ribonucleotides, and more particularly IMP and GMP; and mixtures thereof; and aroma chemicals, including synthetic flavour oils and flavouring aromatics and/or oils, oleoresins, essences, distillates, and extracts derived from plants, leaves, flowers, fruits, and so forth, and combinations comprising at least one of the foregoing.

Particular flavour oils can include cinnamon oil, bay oil, anise oil, thyme oil, cedar leaf oil, oil of nutmeg, allspice, oil of sage, mace, oil of bitter almonds, and cassia oil; artificial, natural and synthetic flavours such as a cheese flavour, a fennel flavour, an all spice flavour, a cinnamon flavour, a mustard flavour, a cardamom flavour, a caraway flavour, a cumin flavour, a clove flavour, a pepper flavour, a coriander flavour, a savoury flavour, a ginger flavour, a star anise flavour, a horseradish flavour, a thyme flavour, a tarragon flavour, a dill flavour, a capsicum flavour, a nutmeg flavour, a basil flavour, a marjoram flavour, a rosemary flavour, a bay leaf flavour, and a wasabi flavour; a nut flavour such as an almond flavour, a hazelnut flavour, a macadamia nut flavour, a peanut flavour, a pecan flavour, a pistachio flavour, and a walnut flavour; and vegetable flavours, such as an onion flavour, a garlic flavour, a cabbage flavour, a carrot flavour, a celery flavour, mushroom flavour, and a tomato flavour.

Particular tastants include all manner of known salt, bitter, sweet and umami tastants, and also including savoury (e.g. kokumi) tastants. Non limiting examples include: NaCl, KCl, MSG, guanosine monophosphate (GMP), inosin monophospahte (IMP), ribonucleotides such as disodium inosinate, disodium guanylate, N-(2-hydroxyethyl)-lactamide, N-lactoyl - GMP, N-lactoyl tyramine, gamma amino butyric acid, allyl cysteine, 1-(2-hydroxy-4-methoxylphenyl)-3-(pyridine-2-yl)propan-1-one, arginine, potassium chloride, ammonium chloride, succinic acid, N-(2-methoxy-4-methyl benzyl)-N'-(2-(pyridin-2-yl)ethyl) oxalamide, N-(heptan-4-yl)benzo(D)(1,3)dioxole-5-carboxamide, N-(2,4-dimethoxybenzyl)-N'-(2-(pyridin-2-yl)ethyl) oxalamide, N-(2-methoxy-4-methyl benzyl)-N'-2(2-(5-methyl pyridin-2-yl)ethyl) oxalamide, and cyclopropyl-E,Z-2,6-nonadienamide. Further tastant materials may be any of those materials mentioned in WO2005102701, WO2006009425, WO2005096843, WO2006046853 and WO2005096844, all of which references are herein incorporated by reference in their entirety.

The seasoning ingredients in the seasoning composition of the present invention may be present in amounts of 60 to 100 wt %, and more particularly 80 to 90 wt %, based on the total weight of the seasoning composition.

The seasoning composition also contains a carrier material for these ingredients. The carrier component can act essentially as a filler to extend the bulk or volume of the seasoning ingredients. It may also be employed to or it might be employed to shield or protect the seasoning ingredients from the effects of moisture or oxygen or any other aggressive media. The carrier material might also act as a means of controlling the release of flavour from the snack food.

Suitable carriers include, but are not limited to mono, di- or trisaccharides, natural or modified starches, hydrocolloids, cellulose derivatives, polyvinyl acetates, polyvinylalcohols, proteins or pectins. Example of particular carrier materials include sucrose, glucose, lactose, levulose, fructose, maltose, ribose, dextrose, isomalt, sorbitol, mannitol, xylitol, lactitol, maltitol, pentatol, arabinose, pentose, xylose, galactose, maltodextrin, dextrin, chemically modified starch, hydrogenated starch hydrolysate, succinylated or hydrolysed starch, agar, carrageenan, gum arabic, gum accacia, tragacanth, alginates, methyl cellulose, carboxymethyl cellulose, hydroxyethyl cellulose, hydroxypropylmethyl cellulose, derivatives and mixtures thereof. Of course, the skilled addresse will appreciate that the cited materials are hereby given by way of example and are not to be interpreted as limiting the invention.

A carrier material may be employed in the seasoning composition of the present invention in amounts of 10 to 40 wt %, and more particularly 15 to 25 wt % based on the total weight of the seasoning composition.

The seasoning composition of the present invention may contain one or more adjuvants.

Adjuvants are ingredients that do not influence the flavour or other organoleptic properties of seasoning, but which can affect its quality in other ways. Adjuvants may include colourants, which can add desirable colour or replace colour lost through processing; flow agents and anti-caking agents, which assist the flowability of the seasoning; pH buffers; preservatives; anti-oxidants, and the like. Adjuvants may also include solvents, emulsifiers, disintegrating agents and lubricants.

Particular anti-oxidants vitamin C, vitamin E, rosemary extract, antrancine, butylated hydroxyanisole (BHA), rosemary extract, antracine, and butylated hydroxytoluene (BHT).

Preservatives prevent or inhibit spoilage of food due to fungi, bacteria and other microorganisms. One or more preservatives may be used as part of the seasoning mixture. They may include, but are not limited to, preservatives such as sodium benzoate, sorbic acid and its salts thereof, and lauric arginate.

One or more flow agents or anti-caking agent may be selected from the group consisting of silicon dioxide (e.g., Sylox 15^{™}), calcium stearate, glyceryl monostearate and glyceryl triacetate.

Adjuvants may be employed in the seasoning composition of the present invention in amounts of 1 to 4 wt %, and more particularly 2 to3 wt %, based on the total weight of the seasoning composition.

Other examples of such carriers or adjuvants for seasoning compositions may be found in for example, "Perfume and Flavour Materials of Natural Origin", S. Arctander, Ed., Elizabeth, N.J., 1960; in "Perfume and Flavour Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998, and "CTFA Cosmetic Ingredient Handbook", J.M. Nikitakis (ed.), 1st ed., The Cosmetic, Toiletry and Fragrance Association, Inc., Washington, 1988.

Particularly important seasoning compositions in the field of snack foods contain a mixture of ingredients able to impart a cheese flavour; e.g. nacho, cheddar, white cheddar, blue, mozzarella, asiago, american, brick, brie, feta, italian, monterey jack, muenster, provolone, ricotta, romano, swiss, taco or parmesan; a meaty flavour, e.g. beef, steak, chicken, smoked, mesquite, barbeque, seafood; an alliaceous flavour, e.g. onion, garlic, chive, leek; a tangy flavour, e.g. citric acid, vinegar and lemon; a spicy flavour, e.g. chilli, pepper, curry; or any combinations thereof.

In a particular embodiment, a cheese seasoning composition comprises a mixture of the following, or some of the following, ingredients:
Tastants, including all manner of known basic taste components and other savoury (kokumi) tastants, such as those described hereinabove; minerals, such as calcium phosphate, tri-potassium phosphate, or ammonium chloride; dairy powders including cheese powders, cream powders; fat powders; Body blocks including yeast powders, hydrolyzed vegetable powder (HVP) and/or soy sauce products; processed modules including reaction flavours, such as those formed by Maillard reactions, and/or enzyme modified dairy powders; herb, spice and/or vegetable powders; aroma chemicals (natural and/or synthetic) which may include essential oils and oleoresins put together to impart the aroma of a desired cheese; carriers and fillers, including lactose, malto dextrin, rice flour and the like.

In another particular embodiment, a meaty seasoning comprises a mixture of the following, or some of the following, ingredients:
Tastants, including all manner of known basic taste components and other savoury (kokumi) tastants such as those described hereinabove; minerals, such as calcium phosphate, tri-potassium phosphate, or ammonium chloride; herb, spice and/or vegetable powders; fat powders; body blocks including yeast powders, HVP's and/or soy sauce products; processed modules including reaction flavours, such as those formed in Maillard reactions, and/or flavour precursor systems; aroma chemicals (natural and/or synthetic) which may include essential oils and oleoresins put together to impart the aroma of a desired meat; carriers and fillers, including lactose, malto dextrin, rice flour and the like.

In another particular embodiment, an alliaceous seasoning comprises a mixture of the following, or some of the following, ingredients:
Tastants, including all manner of known basic taste components and other savoury (kokumi) tastants such as those described hereinabove; minerals, such as calcium phosphate, tri-potassium phosphate, or ammonium chloride; herb, spice and/or vegetable powders; fat powders; body blocks including yeast powders, HVP's and/or soy sauce products; processed modules including reaction flavours, such as those formed in Maillard reactions, and/or flavour precursor systems; aroma chemicals (natural and/or synthetic) which may include essential oils and oleoresins put together to impart the aroma of the desired alliaceous note; carriers and fillers, including lactose, malto dextrin, rice flour, and the like.

In another particular embodiment, a spicy seasoning comprises a mixture of the following, or some of the following, ingredients:
Tastants, including all manner of known basic taste components and other savoury (kokumi) tastants such as those described hereinabove; minerals, such as calcium phosphate, tri-potassium phosphate, or ammonium chloride; herb, spice and/or vegetable powders; fat powders; body blocks including yeast powders, HVP's and/or soy sauce products; processed modules including reaction flavours, such as those formed in Maillard reactions and/or flavour precursor systems; aroma chemicals (natural and/or synthetic) which may include essential oils and oleoresins put together to impart the aroma of the desired spicy note; carriers and fillers, including lactose, malto dextrin, rice flour and the like.

The seasoning composition of the present invention is characterized in that at least a part of the seasoning ingredients are contained in granules. The term "granule" or "granules" as used herein, refers to a solid particle that is built-up from a smaller primary particle or primary particles.

The volume average diameter of the granules may be in the range of 250 to 1400 microns, and in particular with a D90 <1000 micron, and still more particularly D50 <600 micron.

A volume average particle size in the range referred to above is important for reasons related to taste and aesthetics. Larger particle size granules can create taste hot spots in the mouth, giving the impression of higher taste intensity, which can be desirable hedonically. Furthermore, it may be possible to reduce levels of salt in any seasoning composition because the saltiness impression provided by these large granules. Large granules can also look aesthetically pleasing, for example, in the case of cheese-flavoured snack foods, the granules applied topically can take on the visual impression of toasted gratinated cheese. Large granules are also important for manufacturing considerations as they are less prone to cause dusting issues. Particle size is also related to the optimization of adherence to the surface of the snack food.

Volume average particle size is measured using a QICPIC particle size and shape analyzer equipped with a high speed camera available from Sympatec GmbH, Germany.

As is well known to persons skilled in the art, a QICPIC apparatus contains a universal dry dispersing unit suitable for use with powders with particle sizes in the range from < 0.1µm to about 4000µm. Using compressed air to disperse the powder, the QICPIC analyzer generates a dry aerosol which is blown through a light beam whereupon high speed photography of the particles is carried out, and thereafter the particles are collected by suction.

The bulk density of the granules is preferably in the range of 400 to 900g/mL, preferably between 700 - 800 g/ml.

The bulk density is measured when the granules are filled into a graded collection funnel. A known volume of the collected granules is then fed into a weighing apparatus under gravity. The bulk density can then be calculated and expressed in kg/m3 or g/l.

A granule having a bulk density in this range is advantageous in that it assists with the nondusting characteristics of the granule. Furthermore, particularly if the granule is to be applied to uncooked snack food dough, granules having bulk density within this range of values exhibits a tendency to sit on the surface of the snack food dough, rather than to sink into it.

In a particular embodiment of the invention the bulk density of the powder is about 750 g/l and the volume average particle size is about 600 microns.

A granule may take the form of a single primary particle, acting as a core, on top of and around which a layer or layers of coating material may be deposited to provide a granule in the form of a so-called coated core.

However, in an alternative embodiment of the present invention, the granule is in the form of a solid composite particle, which is built-up by the agglomeration of a plurality of primary particles.

The plurality of primary particles may be provided by a mixture of powdered seasoning ingredients. More particularly, the powdered seasoning ingredients are those available commercially in powder form, or they are ingredients which can be easily and economically rendered into powder form, for example by dissolving in water or an aqueous-miscible solvent, evaporating to form a cake and thereafter grinding or milling the cake into powder form.

Granules may be formed by granulation techniques known in the art. Granulation techniques include both dry and wet granulation. Wet granulation is preferred. Wet granulation encompasses a variety of techniques that can be described under the term of fluid-bed drying or fluid-bed granulation. There are various methods of fluid-bed drying known in the art, including so-called "top spray", "bottom spray", and "tangential spray" drying.

Fluid-bed drying is the process of fluidizing a powder comprising primary particles and then either spraying a coating solution or dispersion to build layers or coatings around the primary particle to build a larger particle (of the "coated core" type); or spraying a binder solution or suspension onto a fluidized powder of primary particles and causing those primary particles to agglomerate and form granules in the form of a composite of primary particles. As soon as the desired granules are formed, spraying of the coating material or the binder solution or suspension is terminated and the liquid evaporated. Fluid bed granulation techniques are well known in the art, and are well documented in standard reference books and patent literature, and as such, an exhaustive discussion of them is not warranted here.

As stated above, granules in the form of composite particles built up through a process of agglomeration of a plurality of primary particles using a binder solution or suspension represents a preferred aspect of the present invention.

A seasoning composition according to the present invention, wherein the granules are provided in the form of agglomerated primary particles, the binding solution or suspension may be selected from an aqueous or an aqueous miscible solvent solution or suspension of a binding agent. Suitable binding agents can be selected from any food grade material that is capable of sticking together a loose mixture of fluidized primary particles. One or more binding agents may be employed in a seasoning composition according to the present invention. They may include, but are not limited to, dextrose, starch, cellulose, dextrin and glycerin. A preferred binding agent is gum Arabic.

The binding agent may be present in a solid seasoning composition of the present invention in amounts of 5 to 50wt %, and more particularly 20 to 40 wt %, based on the total weight of the solid seasoning composition.

In an embodiment of the present invention, all of the seasoning ingredients contained in the seasoning composition described herein above are contained in the primary particles of the solid seasoning component.

In another embodiment of the invention, only a fraction of the seasoning ingredients contained in the seasoning composition defined herein above is contained in the primary particles of the solid seasoning component.

In a more particular embodiment, in which only a fraction of the seasoning ingredients contained in the seasoning composition defined herein above is contained in the primary particles of the solid seasoning component, the balance of the seasoning ingredients is incorporated into said seasoning composition as part of the binder solution or suspension.

The seasoning composition containing the seasoning ingredients in the solid seasoning component as herein above described may represent the total seasoning that is to be applied to a snack food to provide the desired seasoning effect, in which case, said seasoning composition represents the total seasoning composition.

Alternatively, the seasoning composition containing the seasoning ingredients in the solid seasoning component as herein above described may represent only a first part of a total seasoning composition.

Accordingly, in another aspect of the invention the seasoning composition as herein above described is a partial seasoning composition (hereinafter a "first partial seasoning composition").

The first partial seasoning composition is intended to be applied to a snack food together with a second partial seasoning composition to provide a total seasoning composition, which total seasoning composition imparts the desired seasoning effect.

Accordingly, in another aspect of the present invention there is provided a total seasoning composition comprising a first partial seasoning composition as herein above described, and a second partial seasoning composition.

In yet another aspect of the invention there is provided a total seasoning composition comprising a first partial seasoning composition and a second partial seasoning composition, wherein said first and second partial seasoning compositions are intended for separate, sequential or simultaneous application topically to the surface of a snack food.

In an embodiment of the present invention, the first partial seasoning composition contains seasoning ingredients that are either commercially available in powdered form, or are water-soluble, and can easily and economically be rendered into powdered form.

As used herein, the term "water-soluble" is intended to mean in relation to a seasoning ingredient, an ingredient that dissolves readily in a small volume of water.

Ingredients that may be incorporated into said first partial seasoning composition are tastants. Such tastants include, but is not limited to all manner of known basic taste components and other savoury (kokumi) tastants; dairy powders including cheese powders, cream powders; fat powders; minerals, such as calcium phosphate, tri-potassium phosphate, or ammonium chloride; herb, spice and/or vegetable powders; fat powders; body blocks including yeast powders, HVP's and/or soy sauce products; processed modules including reaction flavours, such as those formed in Maillard reactions, and/or flavour precursor systems; carriers and fillers, including lactose, malto dextrin, rice flour and the like.

The second partial seasoning composition may contain ingredients, which together with the seasoning ingredients contained in said first partial seasoning composition, represent the total seasoning composition that is intended to be applied topically to a snack food to provide a desired flavour effect.

More particularly, the second partial seasoning composition contains the aroma component of the seasoning. The second partial seasoning composition may be in the form of an oil or a fat, which is a liquid at the operating temperature of the apparatus employed to spray the second partial seasoning composition onto a snack food.

More particularly still, seasoning ingredients suitable for use in said second partial seasoning composition include ingredients that are oils or fats, or are ingredients that are soluble in oils or organic solvents.

Non-limiting examples of suitable ingredients include synthetic flavour oils and flavouring aromatics and/or oils, oleoresins, essences, distillates, and extracts derived from plants, leaves, flowers, fruits, and so forth, and combinations comprising at least one of the foregoing, such as any of the flavour oils referred to herein above.

In a particular embodiment of the present invention, a cheese seasoning composition provided in the form of first and second partial seasoning compositions, contains a first partial seasoning composition containing ingredients selected from the group consisting of tastants, including all manner of known basic taste components and other savoury (kokumi) tastants; dairy powders including cheese powders, cream powders; fat powders; minerals, such as calcium phosphate, tri-potassium phosphate, or ammonium chloride; herb, spice and/or vegetable powders; fat powders; body blocks including yeast powders, HVP's and/or soy sauce products; processed modules including reaction flavours, such as those formed in Maillard reactions, and/or flavour precursor systems; carriers and fillers, including lactose, malto dextrin, rice flour and the like; and a second partial seasoning composition containing ingredients selected from the group consisting of aroma chemicals (natural and/or synthetic) including essential oils and oleoresins put together to impart the aroma of the desired cheese note.

In another particular embodiment, a meaty seasoning composition provided in first and second parts, contains a first partial seasoning composition contain ingredients selected from the group consisting of tastants, including all manner of known basic taste components and other savoury (kokumi) tastants; fat powders; minerals, such as calcium phosphate, tri-potassium phosphate, or ammonium chloride; herb, spice and/or vegetable powders; body blocks including yeast powders, HVP's and/or soy sauce products; processed modules including reaction flavours, such as those formed in Maillard reactions, and/or flavour precursor systems; carriers and fillers, including lactose, malto dextrin, rice flour and the like; and a second partial seasoning composition contains seasoning ingredients selected from the group consisting of aroma chemicals (natural and/or synthetic) including essential oils and oleoresins put together to impart the aroma of the desired meaty note.

In another particular embodiment, an alliaceous seasoning composition provided in first and second parts, contains a first partial seasoning composition contains seasoning ingredients selected from the group consisting of tastants, including all manner of known basic taste components and other savoury (kokumi) tastants; fat powders; minerals, such as calcium phosphate, tri-potassium phosphate, or ammonium chloride; herb, spice and/or vegetable powders; body blocks including yeast powders, HVP's and/or soy sauce products; processed modules including reaction flavours, such as those formed in Maillard reactions, and/or flavour precursor systems; carriers and fillers, including lactose, malto dextrin, rice flour and the like; and a second partial seasoning composition contains seasoning ingredients selected from the group consisting of aroma chemicals (natural and/or synthetic) including essential oils and oleoresins put together to impart the aroma of the desired alliaceous note.

Seasoning compositions as herein above described may be applied topically to all manner of farinaceous or starch-based snack food known in the art.

Particular snack foods include potato chips, crisps, nuts, tortilla-tostada, pretzels, cheese snacks, corn snacks, potato-snacks, ready-to-eat popcorn, microwaveable popcorn, pork rinds, nuts, crackers, and other baked or extruded goods.

Accordingly, in another aspect the invention provides a farinaceous or starch-based snack food comprising a topical coating of a seasoning composition as herein defined.

Methods of applying the seasoning composition to a snack food are hereinafter described in order to allow the skilled person to understand further aspects of the present invention.

Methods and apparatus for applying seasonings topically to snack foods are well known in the art. The primary objective of any method and/or apparatus is to apply seasoning in a uniform and consistent manner. The choice of particular apparatus one employs will depend upon such factors as the nature or state of the product to be coated, as well as the coating requirements for the product.

There are two principle types of seasoning applicators:
A drum tumbler, as the name suggests, consists of a (usually stainless steel) rotating drum or drums, configured in such a way that snack food pieces to be coated proceed along the length of the drum, entering uncoated and exiting coated with seasoning. The rotating drum arrangement serves to cause the pieces to lift and fall through an oil mist that can be expressed from a nozzle or series of nozzles, coating the snack food and acting as an adhesive, before passing through a curtain of seasoning powder delivered from a suitable metering device. Alternatively, a slurry of powder dispersed in a oleaginous carrier can be sprayed onto the pieces as they tumble and traverse through the drum. In yet another embodiment, the pieces could pass immediately from a fat fryer and into the drum. In this case, the oil fresh from the frying process can act as an adhesion aid for the powder seasoning and as such, it might not be necessary to spray additional oil to assist with adhesion. Given the mechanical forces acting on the snack food pieces, the drum tumbler system is usually only suitable for seasoning already cooked snack foods, which are sufficiently robust to withstand the tumbling process.

A conveyer-based applicator is another means by which one can apply seasoning to a snack food. As the name suggests, snack food in the form of a continuous sheet, or cut into finished pieces is placed on a surface, and is caused to pass sequentially or through an oil mist and a curtain of seasoning powder. Or in the alternative, the powder can be dispersed in an oleaginous carrier to form a slurry, which is sprayed onto the snack food.

The conveyer-based applicator is suitable for coating both cooked and uncooked snack food. However, it is unconventional to apply topical seasoning, other than salt grains, to snack food dough before cooking because seasoning particles can sink into uncooked dough, and the seasoning ingredients or other adjuvants such as colourants they contain can bleed into the dough and the seasoning can lose its desired up-front sensorial and/or visual effect as a result.

In another aspect of the invention there is provided a method of seasoning a snack food comprising the step of applying topically to said snack food, a seasoning composition as herein above described.

In a more particular embodiment of the invention, the method comprises the steps of:
i) applying topically to uncooked snack food dough, a seasoning composition as herein above described; and
ii) cooking the uncooked dough in an oven or fryer.

In a still more particular embodiment of the invention, the method comprises the steps of:
i) applying topically to uncooked snack food dough, a seasoning composition comprising a solid seasoning component as herein above described as a first partial seasoning composition;
ii) cooking the uncooked dough in an oven or fryer; and
iii) applying topically to the cooked snack food a second partial seasoning composition containing a second part of a total seasoning.

In further particular embodiments of the method, the seasoning composition, or first and second partial seasoning compositions may contain the seasoning ingredients referred to herein above.

In yet another aspect of the invention there is provided the use of said first partial seasoning composition and said second partial seasoning compositions for the separate, sequential or simultaneous application of a total seasoning composition topically to the surface of a snack food.

In the practice of the method according to the present invention, when the snack food is in the form of uncooked dough, the seasoning applicator may be arranged sequentially in upstream relationship with an oven or fryer for cooking the snack food, such that coating of at least that part of the seasoning composition containing the solid seasoning component, takes place before cooking. If desired however, the seasoning applicator can be arranged sequentially downstream of an oven or fryer such that the snack food is cooked before coating.

There now follows a series of examples that serve to further illustrate the invention.

### Example 1

### Preparation of agglomerated granules

The ingredients are shown below:

| **Material** | **Gram** |
|---|---|
| **A** | |
| Taste module | 160 |
| MSG | 100 |
| Malto Dextrine | 200 |
| Salt | 300 |
| Yeast Extract | 40 |
| Lactic Acid (SD) | 20 |
| Salt Flavour | 10 |

| **B** | |
|---|---|
| Water | 114 |
| Gum Arabic | 50 |

The process was carried out in a rotor granulator operating under the following conditions (with the usual slight practical variations):

| | |
|---|---|
| Inlet temperature | 100 °C |
| Product Temperature | 55 °C |
| Air flow | 70 m3/h |
| Nozzle air pressure | 1 bar |

One batch was prepared, in which a solution of gum Arabic (B) is sprayed on to the powder mix (A) in the fluidised bed processing agglomerates.

The agglomerates were then collected and sieved to give agglomerates of a D90 < 1000 micron.

### Example 2

A standard cracker dough was prepared mixing flour, baking powder, salt, enzymes, glucose syrup, shortening and water. The dough was spread to form the dough into a sheet placed on a tray.

Granules formed according to Example 1 were sprinkled onto the uncooked dough in an amount of 1.5 wt % based on the weight of the cracker dough.

The seasoned dough was then baked in an oven initially at 260 degrees Celsius for 4 minutes, and for a further 6 minutes at 125 degrees celcius until the dough was thoroughly cooked.

A cheese aroma oil 10 wt % in a carrier oil was sprayed onto the cooked crackers in an amount of 8 wt % based on the weight of the cooked cracker, by passing the cracker through a spinning disk applicator.

The seasoning on the cracker had a uniformly pleasant appearance of toasted gratinated cheese. Despite the low oil content (8 wt %) the cracker had a desirable cheese flavour and pleasant, rich mouthfeel.

Furthermore, the spraying equipment did not display any tendency towards blockage during the application process, and was free of the polluting greasiness that typically is experienced when applying a seasoning in one part form as a slurry.

### Summary

The present invention provides a seasoning composition comprising a solid seasoning component in the form of a plurality of granules, optionally having a volume average particle size 250 to 1400 microns, wherein said granules contain a mixture of seasoning ingredients; a carrier for the seasoning ingredients; and optionally at least one adjuvant component.

In an embodiment, the granules are formed from a plurality of agglomerated primary particles containing seasoning ingredients.

In an embodiment, the primary particles are bound together with a binding solution or suspension.

In an embodiment, the binding solution or suspension comprises a binding agent selected from the group consisting of gum Arabic, maltodextrin and cellulose derivatives, such as methyl cellulose.

In an embodiment, the binding solution or suspension contains seasoning ingredients.

In an embodiment, the granules have a bulk density of between 250 g/l and 1000 g/l.

In an embodiment, the seasoning composition represents a first partial seasoning composition of a total seasoning composition.

The present invention further provides a seasoning composition comprising a first partial seasoning composition and a second partial seasoning composition, suitable for separate, sequential or simultaneous application, topically to the surface of a snack food.

In an embodiment, the first partial seasoning composition contains ingredients selected from tastants.

In an embodiment, the second partial seasoning composition is an aroma oil.

The present invention further provides a snack food comprising a topical coating of a seasoning composition according to the invention.

In an embodiment, the snack food is farinaceous or starch-based.

In an embodiment, the snack food is a cracker.

The present invention further provides a method of seasoning a snack food comprising the step of applying topically to the surface of the snack food, a seasoning composition as defined in the present disclosure.

In an embodiment, at least part of the seasoning composition is applied to uncooked snack food dough.

In an embodiment, the method comprises the steps of:
i) applying topically to uncooked snack food dough, a seasoning composition defined in any of the claims 1 through 9; and
ii) cooking the uncooked dough in an oven or fryer.

In an embodiment, the method comprises the steps of:
i) applying topically to an uncooked snack food dough, a first partial seasoning composition according to the claims 7 through 9;
ii) cooking the coated snack food dough in an oven or fryer; and
iii) applying topically to the cooked snack food, a second partial seasoning composition.

## Claims

1. A seasoning composition comprising a solid seasoning component in the form of a plurality of granules,
wherein said granules contain a mixture of seasoning ingredients, a carrier for the seasoning ingredients, and optionally at least one adjuvant component,
wherein the granules are formed from a plurality of agglomerated primary particles containing seasoning ingredients,
wherein the primary particles are bound together with a binding solution or suspension,
wherein the carrier is selected from the group consisting of mono-, di- or trisaccharides, natural or modified starches, hydrocolloids, cellulose derivatives, polyvinyl acetates, polyvinylalcohols, proteins or pectins,
**characterized in that** the seasoning ingredients are present in amounts of 60 to 100 wt % based on the total weight of the seasoning composition.

2. The seasoning composition of claim 1, wherein the carrier is selected from the group consisting of sucrose, glucose, lactose, levulose, fructose, maltose, ribose, dextrose, isomalt, sorbitol, mannitol, xylitol, lactitol, maltitol, pentatol, arabinose, pentose, xylose, galactose, maltodextrin, dextrin, chemically modified starch, hydrogenated starch hydrolysate, succinylated or hydrolysed starch, agar, carrageenan, gum arabic, gum accacia, tragacanth, alginates, methyl cellulose, carboxymethyl cellulose, hydroxyethyl cellulose, hydroxypropylmethyl cellulose, derivatives and mixtures thereof.

3. The seasoning composition of claim 1 or 2, wherein the carrier is present in amounts of 10 to 40 wt %, and more particularly 15 to 25 wt %, based on the total weight of the seasoning composition.

4. The seasoning composition of any one of claims 1 to 3, wherein the binding solution or suspension comprises a binding agent selected from the group consisting of dextrose, starch, cellulose, dextrin and glycerin, in particular a binding agent selected from the group consisting of gum Arabic, maltodextrin and methyl cellulose.

5. The seasoning composition of any one of claims 1 to 4, wherein the binding solution or suspension contains seasoning ingredients.

6. The seasoning composition of any one of claims 1 to 5, wherein the seasoning ingredients are selected from the group consisting of sugars, fats, salts, MSG, calcium phosphate, food acids, amino acids, proteins, purines, synthetic flavour oils and flavouring aromatics and/or oils, oleoresins, essences, distillates, and extracts derived from plants, leaves, flowers, and fruits, and combinations thereof.

7. The seasoning composition of any one of claims 1 to 6, wherein the seasoning ingredients are present in amounts of 60 to 90 wt %, and more particularly 60 to 80 wt % or 80 to 90 wt %, based on the total weight of the seasoning composition.

8. The seasoning composition of any one of claims 1 to 7, wherein the granules have a volume average particle size 250 to 1400 microns, and in particular with a D90 <1000 micron, and still more particularly D50 <600 micron.

9. The seasoning composition of any one of claims 1 to 8, wherein the granules have a bulk density of between 250 g/l and 1000 g/l.

10. The seasoning composition of any one of claims 1 to 9, wherein the bulk density is about 750 g/l and the volume average particle size is about 600 microns.

11. A snack food comprising a topical coating of a seasoning composition according to any one of claims 1 to 10.

12. The snack food according to claim 11, which is farinaceous or starch-based.

13. The snack food according to claim 11 or 12, which is a cracker.

14. A method of seasoning a snack food, comprising the steps of:
(i) applying topically to the surface of an uncooked snack food dough, a seasoning composition as defined in any one of claims 1 to 10; and
(ii) cooking the uncooked dough in an oven or fryer.
